(19) Europäisches Patentamt
European Patent Office
Office européen des brevets

(11) **EP 4 730 411 A1**

(12) **EUROPEAN PATENT APPLICATION**

(43) Date of publication:
**22.04.2026 Bulletin 2026/17**

(21) Application number: **25210223.1**

(22) Date of filing: **21.10.2025**

(51) International Patent Classification (IPC):
*H01M 4/04* (2006.01)    *H01M 4/134* (2010.01)
*H01M 4/36* (2006.01)    *H01M 4/587* (2010.01)
*H01M 4/62* (2006.01)    *H01M 10/052* (2010.01)

(52) Cooperative Patent Classification (CPC):
**H01M 10/052; H01M 4/0428; H01M 4/134; H01M 4/366; H01M 4/587; H01M 4/625**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **21.10.2024 KR 20240144086**
**08.04.2025 KR 20250045753**

(71) Applicants:
• **SK On Co., Ltd.**
**Seoul 03161 (KR)**
• **SK innovation Co., Ltd.**
**Seoul 03188 (KR)**

(72) Inventors:
• **PARK, Yang Kyu**
**34124 Daejeon (KR)**
• **KIM, Seon Ah**
**34124 Daejeon (KR)**
• **KIM, Eun Hyo**
**34124 Daejeon (KR)**
• **SHIM, Hyeon Woo**
**34124 Daejeon (KR)**
• **LEE, Jong Hyuk**
**34124 Daejeon (KR)**
• **CHUNG, Ju Ho**
**34124 Daejeon (KR)**

(74) Representative: **Stolmár & Partner Patentanwälte PartG mbB Blumenstraße 17 80331 München (DE)**

(54) **ANODE ACTIVE MATERIAL FOR LITHIUM SECONDARY BATTERY, METHOD OF PREPARING THE SAME AND LITHIUM SECONDARY BATTERY INCLUDING THE SAME**

(57) An anode active material for a lithium secondary battery includes a silicon-based active material that includes silicon oxide particles and a carbon coating layer formed on at least a portion of a surface of the silicon oxide particles. A carbon crystallinity of the carbon coating layer is in a range from 0.3 to 0.9. A lithium secondary battery including the anode active material, and a method of preparing the anode active material are also provided.

FIG. 1

EP 4 730 411 A1

**Description**

BACKGROUND

1. Field

The disclosure of this patent application relates to an anode active material for a lithium secondary battery, a method of preparing the same and a lithium secondary battery including the same.

2. Descriptions of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as a power source of an eco-friendly vehicle such as an hybrid automobile.

Examples of the secondary battery include a lithium secondary battery, a nickelcadmium battery, a nickel-hydrogen battery, etc. The lithium secondary battery among the secondary batteries is being actively developed due to high operational voltage and energy density per unit weight, a high charging rate, a compact dimension, etc.

For example, a lithium secondary battery may include a cathode and an anode. An electrode such as the cathode and the anode may include an electrode active material capable of reversibly absorbing and releasing lithium ions. A current may be generated through a chemical reaction in the electrode. A graphite-based material or a silicon-based material may be used as an active material for the anode. The silicon-based active material may provide high energy density. However, volume expansion, or mechanical and chemical defects may be caused during charging and discharging to reduce a life-span of the secondary battery.

SUMMARY

According to an aspect of the present disclosure, there is provided an anode active material for a lithium secondary battery having improved power and life-span properties.

According to an aspect of the present disclosure, there is provided a method of preparing an anode active material for a lithium secondary battery having improved power and life-span properties.

According to an aspect of the present disclosure, there is provided a lithium secondary battery having improved power and life-span properties.

An anode active material for a lithium secondary battery includes a silicon-based active material that includes silicon oxide particles and a carbon coating layer formed on at least a portion of a surface of the silicon oxide particles. A carbon crystallinity defined by Equation 1 of the carbon coating layer is in a range from 0.3 to 0.9.

$$[\text{Equation 1}]$$

$$\text{carbon crystallinity} = I_a/I_b$$

In Equation 1, $I_a$ represents an intensity of a C=C peak measured by an X-ray absorption spectroscopy (XAS), and $I_b$ represents an intensity of a C-H peak measured by the XAS.

In some embodiments, the carbon crystallinity of the carbon coating layer may be in a range from 0.4 to 0.8.

In some embodiments, the silicon oxide particles may include $SiO_x$ ($0<x\leq2$).

In some embodiments, an O1s peak area ratio measured by an X-ray photoelectron spectroscopy (XPS) analysis and defined by Equation 2 may be in a range from 0.02 to 0.05:

$$[\text{Equation 2}]$$

$$\text{O1s peak area ratio} = A_O/A_H$$

In Equation 2, $A_O$ is an area of an O1s peak measured by the XPS on the silicon oxide particles, and $A_H$ is an area of a Si-OH peak measured by the XPS on the silicon oxide particles.

In some embodiments, the O1s peak area ratio of the silicon oxide particles may be in a range from 0.025 to 0.04.

In some embodiments, the silicon oxide particles may have a core portion and a surface portion formed on the core portion, and an oxidation number ratio defined by Equation 3 of the silicon oxide particles may be in a range from 0.2 to 1.

[Equation 3]

$$\text{oxidation number ratio} = O_S/O_C$$

In Equation 3, $O_S$ is an oxidation number of the surface portion of the silicon oxide particles obtained by an X-ray photoelectron spectroscopy (XPS) analysis, and Oc is an oxidation number of the core portion of the silicon oxide particles obtained by the XPS analysis.

In some embodiments, a shortest distance from a surface of the silicon oxide particle to the core portion may be 30 nm or more.

In some embodiments, a peak intensity ratio of a Raman spectrum defined by Equation 4 may be in a range from 1 to 7.

[Equation 4]

$$\text{peak intensity ratio of Raman spectrum} = I(520)/I(470)$$

In Equation 4, I(520) is a peak intensity of the silicon oxide particles in the Raman spectrum at a wavelength of 520 $cm^{-1}$, and I(470) is a peak intensity of the silicon oxide particles in the Raman spectrum at a wavelength of 470 $cm^{-1}$.

In some embodiments, a peak intensity ratio of the Raman spectrum of the silicon oxide particles is in a range from 2 to 5.5.

In some embodiments, a crystallite size of the silicon oxide particles as measured by an X-ray diffraction (XRD) analysis and defined by Equation 5 may be in a range from 2 nm to 6 nm.

[Equation 5]

$$L = \frac{0.9\lambda}{\beta cos\theta}$$

In Equation 5, L is the crystallite size of the silicon oxide particle measured by the XRD analysis and represented by a unit of nanometer (nm), $\lambda$ is an X-ray wavelength represented by a unit of nanometer (nm), $\beta$ is a full width at half maximum (FWHM) of a (111) plane of the silicon oxide particles represented by a unit of rad, and $\theta$ is a diffraction angle represented by a unit of rad.

In some embodiments, a specific surface area of the silicon oxide particles may be in a range from 1 $m^2/g$ to 5 $m^2/g$.

In some embodiments, an average particle diameter (D50) of the silicon oxide particles may be in a range from 4 $\mu$m to 7 $\mu$m.

In some embodiments, the anode active material may further include a carbon-based active material.

In some embodiments, the carbon-based active material may include artificial graphite, natural graphite, or a mixture thereof.

In some embodiments, a content of the silicon oxide particles may be greater than 0 wt%, and 10 wt% or less, based on a total weight of the anode active material.

A lithium secondary battery includes an anode including the anode active material for a lithium secondary battery according to the above-described embodiments, and a cathode facing the anode.

In a method of preparing an anode active material for a lithium secondary battery, silicon sources may be mixed and heat-treated to obtain silicon oxide particles. A carbon coating layer may be formed by reacting the silicon oxide particles with a carbon gas. A carbon crystallinity defined by Equation 1 of the carbon coating layer may be in a range from 0.3 to 0.9.

[Equation 1]

$$\text{carbon crystallinity} = I_a/I_b$$

In Equation 1, $I_a$ represents an intensity of a C=C peak measured by an X-ray absorption spectroscopy (XAS), and $I_b$ represents an intensity of a C-H peak measured by the XAS.

In some embodiments, a temperature of the heat-treating may be in a range from 800 °C to 1200 °C, preferably 850 °C to 1100 °C, more preferably 880 °C to 1000 °C, and most preferably 900 °C to 980 °C.

In some embodiments, the silicon sources may include silicon particles and silicon dioxide ($SiO_2$) particles.

An anode active material for a lithium secondary battery according to embodiments of the present disclosure includes a carbon coating layer formed on at least a portion of a surface of the silicon oxide particle. Accordingly, deterioration of the silicon oxide particles may be prevented and conduction of lithium ions may be facilitated. Thus, a lithium secondary battery having improved power and life-span properties may be provided,

The silicon oxide particles according to the embodiments of the present disclosure may have improved crystallinity. Accordingly, a lithium secondary battery having enhanced storage properties at high temperature may be provided while achieving high capacity properties.

The anode active material and the lithium secondary battery according to the present disclosure may be widely applied in green technology fields such as an electric vehicle, a battery charging station, a solar power generation, a wind power generation, etc., using a battery, etc. The anode active material and the lithium secondary battery according to the present disclosure may be used for eco-friendly electric vehicles and hybrid vehicles to prevent a climate change by suppressing air pollution and greenhouse gas emissions. etc.

BRIEF DESCRIPTION OF THE DRAWINGS

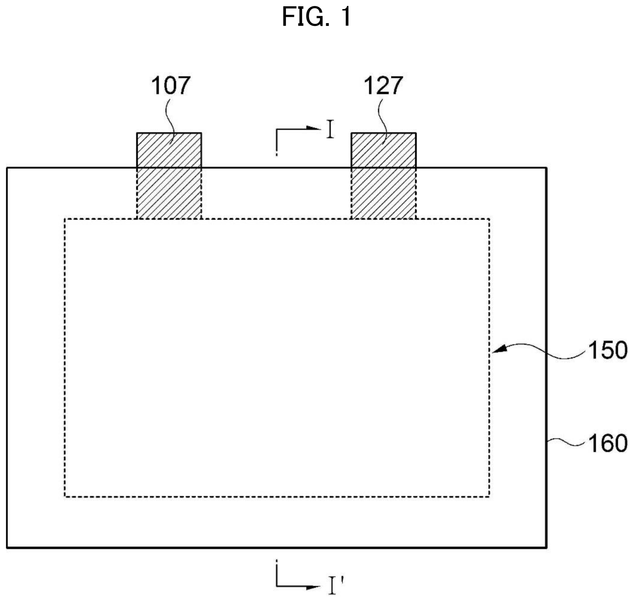

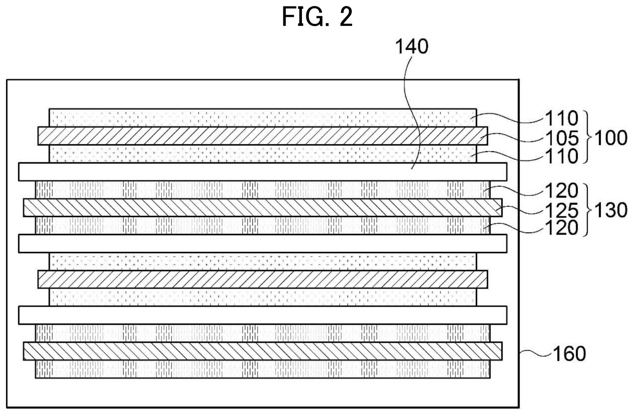

FIG. 1 and FIG. 2 are a schematic plan view and a schematic cross-sectional view, respectively, illustrating a lithium secondary battery in accordance with example embodiments.

DETAILED DESCRIPTION OF THE EMBODIMENTS

According to embodiments of the present disclosure, an anode active material for a lithium secondary battery including a silicon-based active material is provided.

According to embodiments of the present invention, an anode and a lithium secondary battery including the anode active material are also provided.

An anode active material for a lithium secondary battery (hereinafter, that may be referred to as an anode active material) according to embodiments of the present disclosure includes a silicon-based active material. The silicon-based active material includes silicon oxide particles.

In some embodiments, the silicon oxide particle may include a silicon oxide. For example, the silicon oxide may include $SiOx$ ($0<x\leq2$).

In an embodiment, the silicon oxide ($SiOx$) may include a lithium compound or a magnesium compound. For example, the $SiOx$ including the lithium compound or the magnesium compound may be a $SiOx$ pre-treated with lithium or magnesium. For example, the $SiOx$ including the lithium compound or the magnesium compound may include lithium silicate or magnesium silicate.

The silicon oxide particles may serve as main particles that substantially provide an activity of the anode. For example, from an aspect of the energy density and the charge/discharge capacity of the secondary battery, the silicon oxide particles may function as a main compound providing the activity of the anode.

In example embodiments, the silicon-based active material includes a carbon coating layer formed on at least a portion of a surface of the silicon oxide particle. The carbon coating layer may suppress an exposure of the silicon oxide particle to an electrolyte solution, thereby maintaining an activity of the anode.

For example, during repeated charging/discharging of the secondary battery, the surface of the silicon oxide particle may be mechanically and chemically damaged. Further, gas may be generated due to side reactions caused when the surface of the silicon oxide particle contacts the electrolyte solution.

The carbon coating layer may suppress swelling of the silicon oxide particle due to repeated charging/discharging, and may suppress the side reactions with the electrolyte solution. Accordingly, life-span properties and a capacity retention of the secondary battery may be improved.

In some embodiments, the carbon coating layer may include an amorphous carbon such as hard carbon, soft carbon, a fired coke, a mesophase pitch carbide, etc., and/or a crystalline carbon such as natural graphite and artificial graphite. These may be used alone or in a combination of two or more therefrom.

In an embodiment, the carbon coating layer may include the amorphous carbon, e.g., hard carbon and/or soft carbon. For example, the amorphous carbon may have improved structural stability. Accordingly, deterioration of the silicon oxide particle due to charging and discharging in a low state of charge (SOC) at which the silicon-based active material mainly reacts may be prevented.

In an embodiment, the carbon coating layer may be formed discontinuously on the surface of the silicon oxide particle. For example, the amorphous carbon may be formed in the form of an island in a local region of the silicon oxide particle.

In an embodiment, the carbon coating layer may be continuously and uniformly formed on the surface of the silicon oxide particle. For example, the amorphous carbon may exist in the form of a film covering at least a portion of the surface of the silicon oxide particle.

In some embodiments, a thickness of the carbon coating layer may be in a range from 0.001 $\mu$m to 0.5 $\mu$m, from 0.001 $\mu$m to 0.3 $\mu$m, or from 0.001 $\mu$m to 0.1 $\mu$m. In the above range, physical damages to the silicon oxide particle may be prevented while achieving capacity and power properties of the secondary battery.

In some embodiments, a content of the carbon coating layer may be in a range from 0.1 wt% to 10 wt%, or from 1 wt% to 5 wt% based on a total weight of the silicon-based active material. In the above range, the carbon coating layer may be uniformly formed on the surface of the silicon oxide particle. Thus, the side reactions with the electrolyte solution may be suppressed while achieving the activity of the anode by the silicon oxide particle.

The content of the carbon coating layer may be measured using a thermogravimetric analysis (TGA). For example, the content of the carbon coating layer may be calculated by measuring a weight change by heat treatment and injection of nitrogen ($N_2$) gas.

In example embodiments, a carbon crystallinity of the carbon coating layer as defined by Equation 1 below may be in a range from 0.3 to 0.9.

[Equation 1]

$$\text{carbon crystallinity} = I_a/I_b$$

In Equation 1, $I_a$ represents an intensity of a C=C peak measured by an X-ray absorption spectroscopy (XAS), and $I_b$ represents an intensity of a C-H peak measured by the XAS.

As the carbon crystallinity increases, a C=C bonding in the carbon coating layer may increase. For example, as the carbon crystallinity decreases, a C-H bonding in the carbon coating layer may increase.

For example, as the carbon crystallinity increases, an electrical conductivity of the anode active material may be improved. However, if the carbon crystallinity increases excessively, an interfacial resistance between the silicon oxide particles may be increased and a lithium ion conductivity may be decreased.

For example, if the carbon crystallinity of the carbon coating layer exceeds 0.9, structural stability of the carbon coating layer may be degraded. Accordingly, the silicon oxide particles may be deteriorated during repeated charge and discharge.

For example, if the carbon crystallinity of the carbon coating layer is less than 0.3, the electrical conductivity of the anode active material may be decreased to cause degradation of the power properties of the secondary battery.

In some embodiments, the carbon crystallinity of the carbon coating layer may be in a range from 0.4 to 0.8, from 0.5 to 0.75, from 0.6 to 0.7, or from 0.65 to 0.68. In the above range, the crystallinity of the carbon coating layer may be further enhanced, thereby preventing deterioration of the silicon oxide particles even during the repeated charge and discharge. Further, volume expansion of the silicon-based active material during the repeated charge and discharge may be suppressed, while achieving additional lithium ion conduction paths. Thus, the power properties and the capacity retention of the secondary battery may be further improved.

For example, the intensity ($I_a$) of the C=C peak and the intensity ($I_b$) of the C-H peak may be measured by an X-ray absorption spectroscopy (XAS) analysis using the following method.

For example, the silicon-based active material including the carbon coating layer formed on the surface of the silicon oxide particles may be prepared as a powder sample. The sample may be attached to a carbon tape.

Thereafter, the carbon tape to which the sample is attached may be irradiated with an X-ray from about 273 eV to about 317 eV at an interval of about 0.15 eV at least twice. A beam size of the X-ray may be 300 $\mu$m$^2$ and at an intensity of the X-ray may be $10^{13}$ photons/sec.

The peak intensities of the C=C and the C-H may be obtained from the XAS spectrum obtained through the irradiation. For example, the intensity ($I_a$) of the C=C peak may represent the peak intensity in a region where the binding energy is in a range from 284 eV to 286.5 eV in the XAS spectrum. For example, the intensity ($I_b$) of the C-H peak may represent the peak intensity in a region where the binding energy is in a range from 287 eV to 288.5 eV in the XAS spectrum.

The silicone oxide particles may have a high energy density, and thus may provide improved initial efficiency and charge/discharge capacity of the anode active material. However, the silicon oxide particles may react with the electrolyte solution to form a solid electrolyte interphase (SEI) to cause gas generation and increased resistance due to irreversible decomposition of the electrolyte solution.

In some embodiments, at least a portion of the silicon oxide may include a crystalline structure.

In an embodiment, the silicon oxide may include both a crystalline structure and an amorphous structure. For example, the crystalline structure may suppress volume expansion of the anode active material and the side reactions with the electrolyte solution. Further, the amorphous structure may maintain a crystallite size of the silicon oxide particles and a ratio of crystalline and amorphous regions in appropriate ranges. Accordingly, a secondary battery having improved capacity and life-span properties may be provided.

Ino some embodiments, an O1s peak area ratio measured by an X-ray photoelectron spectroscopy (XPS) analysis and defined by Equation 2 below may be in a range from 0.02 to 0.05.

$$[\text{Equation 2}]$$

$$\text{O1s peak area ratio} = A_O/A_H$$

In Equation 2, $A_O$ is an area of an O1s peak measured by the XPS on the silicon oxide particles, and $A_H$ is an area of a Si-OH peak measured by the XPS on the silicon oxide particles.

For example, an O1s spectrum obtained by the XPS analysis of the silicon oxide particles may include the Si-OH peak in a region with a binding energy of 530.8 eV, a Si-$O_X$ peak in a region with a binding energy of 532.5 eV, and a Si-O-Si peak in a region with a binding energy of 533.7 eV.

For example, an increase in the O1s peak area ratio may indicate an increase in -OH bonds in the silicon oxide particles and a decrease in the crystallinity of the silicon oxide particles. For example, a decrease in the O1s peak area ratio may indicate a decrease in the - OH bonds in the silicon oxide particles and an increase in the crystallinity of the silicon oxide particles.

For example, when the O1s peak area ratio exceeds 0.05, the -OH bonds may be excessively increased in the silicon oxide particles. Accordingly, the conductivity of lithium ions in the silicon oxide particles may be decreased to degrade power and capacity properties.

For example, when the O1s peak area ratio is less than 0.02, the -OH bonds may be excessively decreases in the silicon oxide particles. Accordingly, structural stability of the silicon oxide may be deteriorated.

In some embodiments, the O1s peak area ratio of the silicon oxide particles may be in a range from 0.025 to 0.04 or from 0.025 to 0.03. In this range, the capacity properties of the silicon oxide particles may be sufficiently achieved while improving structural stability. Thus, high-capacity and high-power properties may be achieved while improving the capacity retention at high temperature.

For example, the O1s peak area ratio of the silicon oxide particles may be measured through an XPS analysis. For example, the silicon oxide particles may be prepared as a powder sample. An O1s spectrum graph may be obtained using an Al X-ray source for the sample, and an peak area may be measured by a deconvolution. For example, a size of the Al X-ray source may be 500 $\mu$m, and the XPS analysis may be performed by repeating the measurement 20 times in a CAE mode.

In some embodiments, the silicon oxide particles may include a core portion and a surface portion formed on the core portion.

For example, the surface portion may be integral with the core portion and may surround the core portion. For example, a thickness of the surface portion may be 30 nm or less.

For example, when measuring the oxidation number of Si from an outermost surface of the particle toward an inside of the particle according to depth, the oxidation number of Si may change, and may not change from a certain depth. For example, a region where the oxidation number of Si changes may be referred to as the surface portion, and a point where the oxidation number of Si does not change may be referred to as an outer boundary of the core portion.

In some embodiments, an oxidation number ratio defined by Equation 3 below may be in a range from 0.2 to 1.

[Equation 3]

$$\text{oxidation number ratio} = O_S/O_C$$

In Equation 3, $O_S$ is the oxidation number of the surface portion of the silicon oxide particle obtained by an X-ray photoelectron spectroscopy (XPS) analysis, and $O_C$ is the oxidation number of the core portion of the silicon oxide particle obtained by the XPS analysis.

The term "the oxidation number of silicon oxide" and/or "the oxidation number" as used herein may refer to a ratio of moles of oxygen to moles of silicon obtained by the XPS analysis of the silicon oxide particles.

For example, $O_S$ may be a ratio of moles of oxygen relative to moles of silicon, obtained by the XPS analysis of the surface portion. For example, Os may be a z value when a silicon oxide composition of the surface portion is represented by $SiO_z$.

For example, Oc may be a ratio of moles of oxygen relative to moles of silicon obtained by the XPS in the core portion. For example, Oc may be a y value when a silicon oxide composition of the core portion is represented by $SiO_y$.

For example, if the oxidation number ratio excessively increases, a thickness of an oxide layer of the surface portion may be increased to reduce lithium ion mobility. For example, if the oxidation number ratio excessively decreases, a $SiO_2$ matrix may not be sufficiently formed in the core portion to cause an expansion of the anode active material and increase the side reactions with the electrolyte solution. Accordingly, the capacity retention of the lithium secondary battery may be reduced.

In some embodiments, the oxidation number of the core portion and/or surface portion of the silicon oxide particle may be obtained by a Si2p spectrum graph from the XPS. For example, deconvolution of the obtained Si2p spectrum may be performed to separate the spectrum into peak regions representing $Si^0$, $Si^{1+}$, $Si^{2+}$, $Si^{3+}$, and $Si^{4+}$.

For example, the $Si^0$ peak region may be a region having a binding energy of 98 eV to 100 eV, the $Si^{1+}$ peak region may be a region having a binding energy of 100 eV to 101 eV, the $Si^{2+}$ peak region may be a region having a binding energy of 101 eV to 102 eV, the $Si^{3+}$ peak region may be a region having a binding energy of 102 eV to 103 eV, and the $Si^{4+}$ peak region may be a region having a binding energy of 103 eV to 106 eV.

The number of silicon and oxygen atoms in each peak region may be calculated based on the obtained $Si^0$, $Si^{1+}$, $Si^{2+}$, $Si^{3+}$, and $Si^{4+}$ peak region. The oxidation number of the silicon oxide in the surface portion and/or the core portion can be obtained using the calculated total number of silicon atoms and total number of oxygen atoms.

In some embodiments, the shortest distance from the surface of the silicon oxide particle to the core portion may be 30 nm or greater. For example, a thickness of the surface portion may be 30 nm or greater. For example, the thickness of the surface portion may be in a range from 30 nm to 50 nm.

For example, Oc may be calculated from data obtained by etching the silicon oxide particle to a depth of 30 nm or greater from the surface using an argon ion gun for the XPS analysis.

For example, after etching the silicon oxide particle to the depth of 30 nm or greater using the argon ion gun, the Si2p spectrum graph may be obtained and the above-mentioned peak areas can be measured by deconvolution. In an embodiment, the oxidation number ratio defined by Equation 3 may be in a range from 0.4 to 0.9, from 0.5 to 0.8, or from 0.6 to 0.7. In this range, the capacity retention rate and charge/discharge properties of the lithium secondary battery may be further improved.

In some embodiments, a peak intensity ratio of a Raman spectrum defined by Equation 4 below may be in a range from 1 to 7.

[Equation 4]

$$\text{peak intensity ratio of Raman spectrum} = I(520)/I(470)$$

In Equation 4, I(520) is a peak intensity of the silicon oxide particles in the Raman spectrum at a wavelength of 520 cm⁻¹, and I(470) is a peak intensity of the silicon oxide particles in the Raman spectrum at a wavelength of 470 cm⁻¹.

For example, I(520) may be a peak intensity corresponding to a crystalline region of the silicon oxide particle (e.g., a region having a crystalline Si structure) in the Raman spectrum obtained by a Raman spectroscopy. I(470) may be a peak intensity corresponding to an amorphous region of the silicon oxide particle (e.g., a region having an amorphous Si structure).

For example, As the peak intensity ratio in the Raman spectrum increases, a growth of a crystalline silicon (hereinafter, abbreviated as "c-Si") may be promoted relatively to an amorphous silicon (hereinafter, abbreviated as "a-Si") in the silicon oxide particle. As the peak intensity ratio in the Raman spectrum decreases, the growth of c-Si relatively to a-Si may be lowered.

As a c-Si content increases, volume change of the anode active material during charge/discharge operation may be increased, and life-span properties of the secondary battery may be degraded.

In some embodiments, the peak intensity ratio of the Raman spectrum may be in a range from 2 to 5.5. In this range, an a-Si content may be increased, and volume expansion of the anode active material during charge/discharge may be suppressed while increasing an energy density.

The Raman spectroscopy analysis may be performed, e.g., by selecting a predetermined region on the surface of the silicon oxide particles and using a Raman mapping with a Raman spectrometer for the region.

The Raman spectroscopy analysis may be performed, e.g., by arbitrarily designating 100 to 5,000 regions on the surface of the silicon oxide particles. An area of each region may be (30 $\mu$m to 50 $\mu$m) $\times$ (30 $\mu$m to 75 $\mu$m).

In an embodiment, a mapping interval for the Raman mapping may be set to, e.g., about 1 $\mu$m to about 10 $\mu$m with respect to an x-axis, and about 1 $\mu$m to about 5 $\mu$m with respect to a y-axis.

A laser wavelength of the Raman spectrometer may be, e.g., in a range from about 532 nm to about 785 nm, a laser power may be in a range from about 5mW to about 90mW, a laser exposure time may be in a range from about 3 seconds to about 20 seconds, and the number of scans may be in a range from 1 to 5 times.

In some embodiments, a crystallite size of the silicon oxide particles measured through an XRD analysis may be in a range from 2 nm to 6 nm, from 3 nm to 6 nm, from 3 nm to 5 nm, or from 3.5 nm to 4.5 nm. In the above ranges, an initial power properties may be improved, and cracks in the anode active material may be suppressed. Accordingly, the power and life-span properties of the secondary battery may be further improved.

For example, the crystallite size of the silicon oxide particle may be calculated by a Scherrer equation represented by Equation 5.

$$[\text{Equation 5}]$$

$$L = \frac{0.9\lambda}{\beta cos\theta}$$

In Equation 5, L is the crystallite size of the silicon oxide particle measured by the XRD analysis and represented by a unit of nanometer (nm), $\lambda$ is an X-ray wavelength represented by a unit of nanometer (nm), $\beta$ is a full width at half maximum (FWHM) of a (111) plane of the silicon oxide particle represented by a unit of rad, and $\theta$ is a diffraction angle represented by a unit of rad.

In some embodiments, in Equation 5, $\beta$ may be a FWHM correcting a value derived from a device. In an embodiment, Si may be used as a standard material for reflecting the device-derived value. In this case, a FWHM profile of Si over an entire 2$\theta$ range may be fitted, and the device-derived FWHM may be expressed as a function of 2$\theta$. Thereafter, a value obtained by subtracting and correcting the FWHM value derived from the device in the corresponding 2$\theta$ obtained from the function may be used as $\beta$.

In some embodiments, a specific surface area of the silicon oxide particles may be in a range from 1 m$^2$/g to 5 m$^2$/g, or from 2 m$^2$/g to 4 m$^2$/g. For example, the specific surface area may be measured by a Brunauer-Emmett-Teller (BET) method using an adsorption amount of nitrogen gas with a specific surface area measuring device.

In the above range, the capacity retention of the secondary battery may be improved, and charge and discharge capacity properties according to intercalation and deintercalation of lithium ions may be further improved.

In some embodiments, an average particle diameter (D50) of the silicon oxide particles may be in a range from 4 $\mu$m to 7 $\mu$m.

In an embodiment, D10 of the silicon oxide particles may be in a range from 1 $\mu$m to 4 $\mu$m.

In an embodiment, D90 of the silicon oxide particles may be in a range from 6 $\mu$m to 9 $\mu$m.

For example, D10, D50 and D90 may each represent a particle diameter at 10%, 50% and 90% in a volume-weighted particle size distribution measured from the silicon oxide particles.

In the above range, uniformity of the silicon oxide particles and a packing density of the anode active material may be improved, and deterioration of the particles may be alleviated. Accordingly, a volume change of an anode including the anode active material may be reduced.

In some embodiments, the anode active material may further include a carbon-based active material. For example, the anode active material may include a mixture of the silicon oxide particles and the carbon-based active material.

In some embodiments, the carbon-based active material may include an amorphous carbon such as a fired coke, a mesophase pitch carbide, hard carbon, soft carbon, or the like, and/or a crystalline carbon such as natural graphite, artificial graphite, or the like. These may be used alone or in a combination of two or more therefrom.

In an embodiment, the carbon-based active material may include artificial graphite, natural graphite, or a mixture thereof. Accordingly, high-temperature storage and life-span properties may both be improved without degrading the energy density and the capacity of the lithium secondary battery.

In some embodiments, the content of the silicon oxide particles may be greater than 0 wt% and 10 wt% or less based on the total weight of the anode active material. In the above range, expansion of the anode active material and an electrode short-circuit may be suppressed, and the life-span and the capacity retention may be improved.

According to embodiments of the present disclosure, a method of preparing the above-described anode active material for a lithium secondary battery is provided.

In example embodiments, the silicon oxide particles may be formed by mixing and heat-treating silicon sources.

In some embodiments, a temperature of the heat treatment may be in a range from 800 °C to 1,200 °C.

In some embodiments, the silicon sources may include silicon particles and silicon dioxide ($SiO_2$) particles. For example, the silicon sources may include at least one selected from the group consisting of silicon and silicon dioxide ($SiO_2$).

In an embodiment, the silicon source may be a mixture of silicon and silicon dioxide. For example, the silicon source may be a mixture of silicon (Si) and silicon dioxide ($SiO_2$) in a weight ratio of 1:1 to 1:3, e.g., 1:2.

For example, the silicon sources may be mixed and introduced into a reactor, and the heat treatment may be performed at a temperature from about 800°C to 1200°C, from 850°C to 1100°C, from 880°C to 1000°C, from 900°C to 980°C, or from 900°C to 950°C under a vacuum atmosphere. In some embodiments, a period of the heat treatment may be in a range from 2 hours to 4 hours, or from 2 hours to 3 hours, and a heating rate may be in a range from 3 °C/min to 7 °C/min.

For example, the silicon source may be introduced into a reactor and mixed at 50 rpm to 200 rpm to perform the heat treatment.

In example embodiments, the mixture of the heat-treated silicon sources may be deposited on a cooling plate to be cooled. A temperature of the cooling plate may be in a range from about 700°C to about 900°C.

Silicon oxide particles can be formed by grinding and sieving the cooled mixture of the silicon sources.

For example, the above-described crystal properties of the silicon oxide particles may be adjusted by controlling the heat treatment temperature in the reactor, the heat treatment period, the heating rate, the mixing rate, and/or the temperature of the cooling plate.

In some embodiments, the prepared silicon oxide particles and a carbon source gas may be mixed and fired to form a carbon coating layer on at least a portion of a surface of the silicon oxide particles.

For example, the carbon source gas may be a mixture of a methane gas and an argon gas.

In some embodiments, the methane gas may be replaced with an ethylene gas, a propylene gas or an acetylene gas, or may be used together with the ethylene gas, the propylene gas or the acetylene gas.

In some embodiments, the carbon coating layer may be formed by a chemical vapor deposition (CVD). For example, a carbon source gas may be introduced into the silicon oxide particles, and fired at a temperature of about 400°C to about 1200°C to form the carbon coating layer. For example, during the firing, a heating rate may be in a range from 5 °C/min to 20 °C/min, and a firing time may be in a range from 60 minutes to 360 minutes.

The above-described properties of the silicon-based active material may be controlled by adjusting the heat treatment temperature of the silicon oxide particles or the firing temperature of the carbon coating layer.

For example, the firing temperature of the carbon coating layer may be adjusted, and particles having a carbon crystallinity of 0.3 to 0.9 of the carbon coating layer formed on the surface of the silicon oxide particles may be selected and used as the anode active material.

FIGS. 1 and 2 are a schematic plan view and a cross-sectional view respectively, illustrating a secondary battery according to embodiments. For example, FIG. 2 is a cross-sectional view taken along line a I-I' shown in FIG. 1.

Referring to FIGS. 1 and 2, the lithium secondary battery may include a cathode 100 and an anode 130 facing the cathode 100.

The cathode 100 may include a cathode current collector 105 and a cathode active material layer 110 formed on at least one surface of the cathode current collector 105.

According to embodiments, the cathode active material layer 110 may be formed on both surfaces (e.g., upper and lower surfaces) of the cathode current collector 105. For example, the cathode active material layer 110 may be formed on each of the upper and lower surfaces of the cathode current collector 105.

The cathode current collector 105 may include stainless steel, nickel, aluminum, titanium, or an alloy thereof. The cathode current collector 105 may include aluminum or stainless steel surface-treated with carbon, nickel, titanium or silver.

The cathode active material layer 110 may include a cathode active material, a binder and/or a conductive material. For example, a cathode slurry may be prepared by mixing and stirring the cathode active material with the binder and/or the conductive material in a solvent. The cathode slurry above may be coated on the cathode current collector 105, and then dried and pressed to form the cathode active material layer 110.

The cathode active material may include a compound capable of reversibly intercalating and deintercalating lithium ions.

In example embodiments, the cathode active material may include a lithium-nickel metal oxide. The lithium-nickel metal oxide may further include at least one of cobalt (Co), manganese (Mn) and aluminum (Al).

The cathode active material may include a lithium transition metal oxide represented by Chemical Formula 1.

[Chemical Formula 1] $\quad$ $Li_aNi_bM_{1-b}O_2$

In Chemical Formula 1, $0.95 \leq a \leq 1.05$, $b \geq 0.5$, and M may include at least one element selected from Na, Mg, Ca, Y, Ti, Zr, Hf, V, Nb, Ta, Cr, Mo, W, Mn, Co, Fe, Cu, Ag, Zn, B, Al, Ga, C, Si, Sn, Ba and Sr.

In an embodiment, the lithium transition metal oxide may include nickel (Ni), and may further include at least one of cobalt (Co) and manganese (Mn). For example, the lithium transition metal oxide may include a nickel-cobalt-manganese (NCM)-based lithium oxide.

Nickel (Ni) may be provided as a metal related to the capacity of the lithium secondary battery. As a content of the nickel increases, the capacity and power of the lithium secondary battery may be increased. However, if the content of nickel is excessively increased, mechanical and electrical stability may be degraded.

Cobalt (Co) may be included to improve a conductivity or reduce a resistance of the lithium secondary battery, and manganese (Mn) may be included to improve mechanical and electrical stability of the lithium secondary battery.

The chemical structure represented by Chemical Formula 1 represents a bonding relationship included in a lattice structure or a crystal structure of the cathode active material, and does not exclude other additional elements. For example, M may serve as a main active element of the cathode active material. Chemical Formula 1 is provided to express the bonding relationship of the main active element and is to be understood as a formula encompassing introduction and substitution of the additional elements.

In an embodiment, an auxiliary element for enhancing chemical stability of the cathode active material or the crystal structure in addition to the main active element may be further included. The auxiliary element may be incorporated into the crystal structure to form a bond, and this case is to be understood as being included within the range of the chemical structure represented by Chemical Formula 1.

The binder may include vinylidene fluoride-hexafluoropropylene copolymer (PVDF-co-HFP), polyvinylidene fluoride (PVDF), polyacrylonitrile, polymethylmethacrylate, or the like.

The conductive material may include a carbon-based conductive material such as graphite, carbon black, graphene, carbon nanotube and/or a metal-based conductive material such as including tin, tin oxide, titanium oxide, a perovskite material, e.g., $LaSrCoO_3$, $LaSrMnO_3$, or the like.

In some embodiments, the electrode density of the cathode 100 may be in a range from 3.0 g/cc to 3.9 g/cc, or from 3.2 g/cc to 3.8 g/cc.

The anode 130 may include an anode current collector 125 and an anode active material layer 120 formed on at least one surface of the anode current collector 125. The anode active material layer 120 may be coated on each of upper and lower surfaces of the anode current collector 125.

In some embodiments, an anode slurry may be prepared by mixing and stirring the anode active material according to the above-described embodiments with a binder, a conductive material, and/or a dispersive agent in a solvent. The anode slurry may be coated on at least one surface of the anode current collector 125, and then dried and pressed to prepare the anode 130.

The anode current collector 125 may include, e.g., gold, stainless steel, nickel, aluminum, titanium, copper, or an alloy thereof, and may include, e.g., copper or a copper alloy.

Materials substantially the same as or similar to the above-described materials may be used as the binder and the conductive material. In some embodiments, the binder for forming the anode may include an aqueous binder such as styrene-butadiene rubber (SBR) for compatibility with a carbon-based active material, and may be used together with a thickener such as carboxymethyl cellulose (CMC).

In example embodiments, an electrode density of the anode 130 may be in a range from 1.0 g/cc to 1.9 g/cc.

In some embodiments, a separator 140 may be interposed between the cathode 100 and the anode 130.

The separator 140 may include a porous polymer film formed of a polyolefin-based polymer such as an ethylene homopolymer, a propylene homopolymer, an ethylene/butene copolymer, an ethylene/hexene copolymer, an ethylene/-methacrylate copolymer, etc. The separator 140 may include a nonwoven fabric formed of a glass fiber having a high melting point, a polyethylene terephthalate fiber, or the like.

According to embodiments, an electrode cell may be defined by the cathode 100, the anode 130, and the separator 140, and a plurality of the electrode cells may be repeatedly stacked to form the electrode assembly 150. For example, the electrode assembly 150 may be a winding type, a stacking type, a zigzag-folding type, or a stack-folding type.

The electrode assembly 150 may be accommodated in a case to define a lithium secondary battery.

In an embodiment, an electrolyte may be accommodated into the case 160 together with the electrode assembly 150.

In example embodiments, a non-aqueous electrolyte solution may be used as the electrolyte.

The non-aqueous electrolyte solution may include a lithium salt as an electrolyte and an organic solvent. The lithium salt may be expressed as, e.g., Li+X-, and examples of an anion (X-) of the lithium salt may include F⁻, Cl⁻, Br⁻, I⁻, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxyethane, diethoxyethane, vinylene carbonate, sulfolane, gamma-butyrolactone, propylene sulfite, tetrahydrofuran, or the like. These may be used alone or in a combination of two or more therefrom.

As illustrated in FIG. 1, electrode tabs (a cathode tab and an anode tab) included in each electrode cell may protrude from the cathode current collector 105 and the anode current collector 125, respectively, to extend to one side of the case 160. The electrode tabs may be fused together with the one side of the case 160 to be connected to an electrode lead (a cathode lead 107 and an anode lead 127) which are extended or exposed to an outside of the case 160.

Although FIG. 1 illustrates that the cathode lead 107 and the anode lead 127 are formed at the same side of the lithium secondary battery or the case 160, the cathode lead 107 and the anode lead 127 may be formed at opposite sides. For example, the cathode lead 107 may be formed on one end portion of the case 160, and the anode lead 127 may be formed on the other end portion of the case 160.

For example, the lithium secondary battery may be manufactured in a cylindrical type using a can, a prismatic type, a pouch type, or a coin type.

The invention relates also to the following numbered aspects:

Aspect 1. An anode active material for a lithium secondary battery comprising a silicon-based active material that comprises silicon oxide particles and a carbon coating layer formed on at least a portion of a surface of the silicon oxide particles,

wherein a carbon crystallinity defined by Equation 1 of the carbon coating layer is in a range from 0.3 to 0.9:

$$[\text{Equation 1}]$$

$$\text{carbon crystallinity} = I_a/I_b$$

wherein, in Equation 1, $I_a$ represents an intensity of a C=C peak measured by an X-ray absorption spectroscopy (XAS), and $I_p$ represents an intensity of a C-H peak measured by the XAS.

Aspect 2. The anode active material for a lithium secondary battery of aspect 1, wherein the carbon crystallinity of the carbon coating layer is in a range from 0.4 to 0.8.

Aspect 3. The anode active material for a lithium secondary battery of aspect 1 or 2, wherein the silicon oxide particles comprise SiOx (0<x≤2).

Aspect 4. The anode active material for a lithium secondary battery of any one of aspects 1 to 3, wherein an O1s peak area ratio measured by an X-ray photoelectron spectroscopy (XPS) analysis and defined by Equation 2 is in a range from 0.02 to 0.05 and preferably 0.025 to 0.04:

$$[\text{Equation 2}]$$

$$\text{O1s peak area ratio} = A_O/A_H$$

wherein, in Equation 2, $A_O$ is an area of an O1s peak measured by the XPS on the silicon oxide particles, and $A_H$ is an area of a Si-OH peak measured by the XPS on the silicon oxide particles.

Aspect 5. The anode active material for a lithium secondary battery of any one of aspects 1 to 4, wherein the silicon oxide particles have a core portion and a surface portion formed on the core portion, and an oxidation number ratio defined by Equation 3 of the silicon oxide particles is in a range from 0.2 to 1:

[Equation 3]

$$\text{oxidation number ratio} = O_S/O_C$$

wherein, in Equation 3, Os is an oxidation number of the surface portion of the silicon oxide particles obtained by an X-ray photoelectron spectroscopy (XPS) analysis, and Oc is an oxidation number of the core portion of the silicon oxide particles obtained by the XPS analysis.

Aspect 6. The anode active material for a lithium secondary battery according to aspect 5, wherein a shortest distance from a surface of the silicon oxide particle to the core portion is 30 nm or more.

Aspect 7. The anode active material for a lithium secondary battery according to any one of aspects 1 to 6, wherein a peak intensity ratio of a Raman spectrum defined by Equation 4 is in a range from 1 to 7, and preferably 2 to 5.5:

[Equation 4]

$$\text{peak intensity ratio of Raman spectrum} = I(520)/I(470)$$

wherein, in Equation 4, I(520) is a peak intensity of the silicon oxide particles in the Raman spectrum at a wavelength of 520 cm$^{-1}$, and I(470) is a peak intensity of the silicon oxide particles in the Raman spectrum at a wavelength of 470 cm$^{-1}$.

Aspect 8. The anode active material for a lithium secondary battery of any one of aspects 1 to 7, wherein a crystallite size of the silicon oxide particles as measured by an X-ray diffraction (XRD) analysis and defined by Equation 5 is in a range from 2 nm to 6 nm:

[Equation 5]

$$L = \frac{0.9\lambda}{\beta cos\theta}$$

wherein, in Equation 5, L is the crystallite size of the silicon oxide particle measured by the XRD analysis and represented by a unit of nanometer (nm), $\lambda$ is an X-ray wavelength represented by a unit of nanometer (nm), $\beta$ is a full width at half maximum (FWHM) of a (111) plane of the silicon oxide particles represented by a unit of rad, and $\theta$ is a diffraction angle represented by a unit of rad.

Aspect 9. The anode active material for a lithium secondary battery of any one of aspects 1 to 8, wherein (a) a specific surface area of the silicon oxide particles is in a range from 1 m$^2$/g to 5 m$^2$/g, and/or (b) an average particle diameter (D50) of the silicon oxide particles is in a range from 4 $\mu$m to 7 $\mu$m.

Aspect 10. The anode active material for a lithium secondary battery of any one of aspects 1 to 9, further comprising a carbon-based active material including artificial graphite, natural graphite, or a mixture thereof.

Aspect 11. The anode active material for a lithium secondary battery of any one of aspects 1 to 10, wherein a content of the silicon oxide particles is greater than 0 wt%, and 10 wt% or less, based on a total weight of the anode active material.

Aspect 12. A lithium secondary battery, comprising:

an anode comprising the anode active material for a lithium secondary battery according to any one of aspects 1 to 11; and a cathode facing the anode.

Aspect 13. A method of preparing an anode active material for a lithium secondary battery, comprising:

mixing and heat-treating silicon sources to obtain silicon oxide particles; and forming a carbon coating layer by reacting the silicon oxide particles with a carbon gas, wherein a carbon crystallinity defined by Equation 1 of the carbon coating layer is in a range from 0.3 to 0.9:

[Equation 1]

$$\text{carbon crystallinity} = I_a/I_b$$

wherein, in Equation 1, $I_a$ represents an intensity of a C=C peak measured by an X-ray absorption spectroscopy (XAS), and $I_b$ represents an intensity of a C-H peak measured by the XAS.

Aspect 14. The method of aspect 13, wherein a temperature of the heat-treating is in a range from 800 °C to 1200 °C, preferably 850 °C to 1100 °C, more preferably 880 °C to 1000 °C, and most preferably 900 °C to 980 °C.

Aspect 15. The method of aspect 13 or 14, wherein the silicon sources comprise silicon particles and silicon dioxide ($SiO_2$) particles.

Examples and Comparative Examples

1. Preparing anode active materials (A-1 to A-13)

Silicon (Si) and silicon dioxide ($SiO_2$) were mixed as silicon sources in a weight ratio of 1:2, and heat-treated to obtain silicon oxide (SiOx) particles.

Specifically, 1,000 g of the silicon sources were introduced into a reactor, and a heat treatment was performed while mixing at about 100 rpm for about 2 hours to 4 hours. A heating rate of the heat treatment was about 5 °C/min, and a heat treatment temperature and a heat treatment time of the silicon sources were adjusted as shown in Table 1.

A methane gas was deposited on the silicon oxide particles by a chemical vapor deposition (CVD) to prepare silicon oxide particles having a carbon coating layer formed thereon.

Thereafter, physical properties of the silicon-based active material including the silicon oxide particles on which the carbon coated layer was formed were analyzed.

Thereafter, the silicon-based active material satisfying the physical properties shown in Tables 2 and 3 was mixed with artificial graphite in a weight ratio of 5:95 to produce anode active materials A-1 to A-13.

2. Measurement of carbon crystallinity of carbon coating layer

A carbon crystallinity of the carbon coating layer was measured using an X-ray absorption spectroscopy (XAS) for the silicon-based active materials mixed in the anode active materials (A-1 to A-13) of Examples and Comparative Examples.

Specifically, the silicon-based active materials were prepared as powder samples and attached to a carbon tape. The samples were irradiated with an X-rays at an energy range of 273 eV to 317 eV, and an interval of approximately 0.15 eV under conditions of an X-ray beam size of 300 $\mu m^2$ and an intensity of $10^{13}$ photons/sec.

Peak intensities in regions of 284 eV to 286.5 eV, and 287 eV to 288.5 eV regions of the XAS spectrum obtained by the irradiation were measured to obtain a C=C peak intensity ($I_a$) and a C-H peak intensity ($I_b$), respectively.

3. Measurement of O1s peak area ratio

The silicon-based active materials mixed in the anode active materials of Examples and Comparative Examples (A-1 to A-13) were attached to a carbon tape to form samples, and an XPS analysis was performed to measure an O1s peak area ratio in the silicon oxide particles.

Specifically, deconvolution of the O1s spectrum obtained by the XPS analysis on a surface of the silicon oxide particles was performed to measure peak areas at binding energies of 530.8 eV, 532.5 eV, and 533.7 eV. Using the above-described Equation 2, a ratio of a Si-OH area in a 530.8 eV binding energy region to an O1s peak area was measured to obtain the O1s peak area ratio.

[XPS analysis conditions]

i) X-ray type: Al k alpha, 1486.68 eV, 900 $\mu m$ beam size
ii) Analyzer: CAE (constant analyzer energy) Mode
iii) Number of scans: 50
iv) Pass energy: 20 eV
v) Dwell Time: 100 ms

4. Measurement of oxidation number ratio

The silicon-based active materials mixed in the anode active materials of Examples and Comparative Examples (A-1 to A-13) were attached to a carbon tape to form samples, and an XPS analysis was performed under the following conditions to obtain Si2p spectra at a core portion and a surface portion of the silicon oxide particles.

[XPS analysis conditions]

    i) X-ray type: Al k alpha, 1486.68 eV, 900 $\mu$m Beam size
    ii) Analyzer: CAE (constant analyzer energy) Mode
    iii) Number of scans: 50
    iv) Pass energy: 20 eV
    v) Dwell Time: 100 ms
    vi) Ion gun: Ar ion
    vii) Ion energy: 4000 eV
    viii) Etch Cycle: 300 s
    ix) Total Levels: 20

Specifically, a peak area in a region of 98 eV to 100 eV, a peak area in a region of 100 eV to 101 eV, a peak area in a region of 101 eV to 102 eV, a peak area in a region of 102 eV to 103 eV, and a peak area in a region of 103 eV to 106 eV were measured to obtain an oxidation number of the surface portion through deconvolution of the Si2p spectrum obtained by performing the XPS analysis on the surface of the silicon oxide particles

The surface of the silicon oxide particle was etched, and a depth where no change was measured in the oxidation number was designated as the surface portion. A peak area in each region as mentioned above was measured to obtain an oxidation number of the core portion through deconvolution of the Si2p spectrum obtained by the XPS analysis of the core portion

### 5. Measurement of volume-based particle size distribution

The silicon-based active materials mixed in the anode active materials (A-1 to A-13) of Examples and Comparative Examples were dispersed in ethanol ($CH_3CH_2OH$) as a dispersion medium. A difference in a diffraction pattern according to a particle size was measured and calculated using a laser diffraction particle size meter (Microtrac MT 3000). D10, D50 and D90 were measured by obtaining particle diameters at points where the volume fraction became 10%, 50%, and 90% of the measured volume-based particle size distribution curve.

### 6. Measurement of Si crystallite size

For the silicon-based active materials mixed in the anode active materials (A-1 to A-13) of Examples and Comparative Examples, a scan of a $2\theta$ value designated from 5° to 80° was performed under the conditions of 45 kV and 40 mA using a Cu X-ray source to obtain a peak value. The obtained peak value was deconvolved with respect to a crystalline peak and an amorphous peak to calculate a crystallite size. Each crystallite size at a (111) crystal plane was measured.

### 7. Measurement of crystallinity (I(520)/I(470))

A Raman spectroscopy analysis was performed on the silicon-based active materials mixed in the anode active materials (A-1 to A-13) of Examples and Comparative Examples to obtain a Raman spectrum. In the Raman spectrum, peak intensities at 520 cm$^{-1}$ and 470 cm$^{-1}$ were each measured. The measured values were shifted based on a center (1000 cm$^{-1}$) and deconvolved to calculate I(520)/I(470).

### 8, Measurement of BET specific surface area

The silicon-based active materials mixed in the anode active materials (A-1 to A-13) of Examples and Comparative Examples were measured by a BET method using an amount of nitrogen gas adsorption with a specific surface area measuring device (BELSORP-mino II). Specifically, the silicon-based active materials were heated to 200°C using a pre-treatment device, and then exposed to a nitrogen gas for 60 minutes. After recording a weight of the sample including the holder, a weight of only the target sample was input. The specific surface area was measured after adding a liquid nitrogen satisfying an appropriate amount (reference line).

[Table 1]

| | heat treatment temperature (°C) | heat treatment time (h) |
|---|---|---|
| Example 1 (A-1) | 900 | 3 |
| Example 2 (A-2) | 930 | 3 |
| Example 3 (A-3) | 940 | 3 |
| Example 4 (A-4) | 935 | 3 |
| Example 5 (A-5) | 950 | 2 |
| Example 6 (A-6) | 950 | 3 |
| Example 7 (A-7) | 980 | 3 |
| Example 8 (A-8) | 900 | 4 |
| Comparative Example 1 (A-9) | 950 | 4 |
| Comparative Example 2 (A-10) | 1000 | 3 |
| Comparative Example 3 (A-11) | 970 | 4 |
| Comparative Example 4 (A-12) | 950 | 4 |
| Comparative Example 5 (A-13) | 920 | 4 |

[Table 2]

| | carbon crystallinity | O1s peak area ratio | oxidation number ratio |
|---|---|---|---|
| Example 1 (A-1) | 0.66 | 0.028 | 0.65 |
| Example 2 (A-2) | 0.63 | 0.034 | 0.49 |
| Example 3 (A-3) | 0.49 | 0.031 | 0.76 |
| Example 4 (A-4) | 0.76 | 0.038 | 0.88 |
| Example 5 (A-5) | 0.31 | 0.049 | 0.32 |
| Example 6 (A-6) | 0.66 | 0.045 | 0.93 |
| Example 7 (A-7) | 0.88 | 0.014 | 0.92 |
| Example 8 (A-8) | 0.66 | 0.028 | 0.15 |
| Comparative Example 1 (A-9) | 0.29 | 0.058 | 0.19 |
| Comparative Example 2 (A-10) | 0.96 | 0.051 | 1.12 |
| Comparative Example 3 (A-11) | 0.98 | 0.048 | 0.95 |
| Comparative Example 4 (A-12) | 0.28 | 0.025 | 0.63 |
| Comparative Example 5 (A-13) | 0.24 | 0.021 | 0.61 |

[Table 3]

| | particle size distribution ($\mu$m) | | | crystallite size (nm) | crystallinity | specific surface area (m$^2$/g) |
|---|---|---|---|---|---|---|
| | D10 | D50 | D90 | | | |
| Example 1 (A-1) | 3.19 | 5.91 | 8.40 | 3.8 | 3.3 | 2.36 |
| Example 2 (A-2) | 3.66 | 6.21 | 9.43 | 4.2 | 4.4 | 2.12 |
| Example 3 (A-3) | 4.01 | 6.21 | 9.43 | 4.2 | 4.8 | 2.30 |
| Example 4 (A-4) | 4.11 | 6.47 | 10.01 | 4.1 | 4.4 | 2.12 |
| Example 5 (A-5) | 4.27 | 6.29 | 10.08 | 6.4 | 0.59 | 4.68 |
| Example 6 (A-6) | 3.19 | 5.69 | 8.73 | 6.5 | 5.8 | 5.11 |

(continued)

| | particle size distribution (μm) | | | crystallite size (nm) | crystallinity | specific surface area (m$^2$/g) |
|---|---|---|---|---|---|---|
| | D10 | D50 | D90 | | | |
| Example 7 (A-7) | 3.14 | 5.10 | 7.91 | 7.8 | 6.3 | 5.70 |
| Example 8 (A-8) | 3.19 | 5.91 | 8.40 | 3.8 | 3.3 | 2.36 |
| Comparative Example 1 (A-9) | 4.93 | 7.43 | 11.21 | 6.2 | 5.9 | 3.36 |
| Comparative Example 2 (A-10) | 3.25 | 5.49 | 8.77 | 9.2 | 7.5 | 5.30 |
| Comparative Example 3 (A-11) | 4.32 | 5.46 | 9.01 | 3.8 | 4.2 | 4.98 |
| Comparative Example 4 (A-12) | 3.18 | 5.88 | 9.01 | 6.2 | 3.3 | 2.15 |
| Comparative Example 5 (A-13) | 3.17 | 5.81 | 8.6 | 3.8 | 5.9 | 2.36 |

### 9. Fabrication of lithium secondary battery

The anode active material (A-1 to A-13) of Examples and Comparative Examples, carbon nanotube (CNT) as a conductive material, and styrene butadiene rubber (SBR) as a binder were mixed in a weight ratio of 80:10:10 to prepare an anode slurry. The anode slurry was coated on a Cu-foil, dried and pressed to prepare an anode having a mixture density of 3 mg/cm$^2$ (based on a cross-section) and 1.42 g/cc.

A lithium secondary battery of a coin cell type was manufactured using an electrolyte solution including 1 wt% of FEC and 1.0M LiPF$_6$ mixed solvent (EC:EMC=3:7 volume ratio) and using a Li foil as a counter electrode. The lithium secondary battery was left at room temperature (25°C) for 12 hours.

### Experimental Example

(1) Evaluation on anode adhesion

A peel-off test was performed on the anodes of Examples and Comparative Examples to evaluate an adhesive force (N) between the anode active material layer and the anode.

(2) Evaluation on anode resistance

An anode resistance (mΩ·cm) was measured for the anodes of Examples and Comparative Examples under measurement conditions of a current of 100 μA, a voltage range of 0.5 V, and the number of pin contacts of 500 using a Hioki XF057 probe unit measuring equipment.

(3) Evaluation on anode expansion ratio

The lithium secondary batteries of Examples and Comparative Examples were subjected to a preliminary cycle under conditions of 0.005V to 1.5V, 0.1C, and 0.01CV, and an additional charging was performed under conditions of 0.005V, 0.1C, and 0.01CV. A thickness of the anode active material layer was measured, and an anode expansion ratio (%) was calculated as an increase ratio with respect to an initial thickness of the anode active material layer.

(4) Evaluation on initial discharge capacity and initial efficiency

Charging (CC/CV, 0.1C, lower limit voltage of 0.005V, cut-off current of 0.01C) and discharging (CC, 0.1C, upper limit voltage of 1.5V) were performed at 25°C to measure an initial charge capacity (Ah) and an initial discharge capacity (Ah). An initial efficiency (%) was evaluated by measuring a percentage (%) of the initial discharge capacity (Ah) relative to the initial charge capacity (Ah).

(5) Evaluation on life-span property (35°C)

The lithium secondary batteries of Examples and Comparative Examples were charged (CC/CV, 0.1C, lower limit voltage of 0.005V, cut-off current of 0.01C) and discharged (CC, 0.1C, upper limit voltage of 1.5V cut-off) at 35°C as one cycle to perform a first cycle. Thereafter, the charging/discharging was repeatedly performed by 1,000 cycles based on a current density of 1C to measure a discharge capacity. A life-span property was evaluated as a percentage (%) of a value obtained by dividing the discharge capacity at the 1,000th cycle by the discharge capacity at the first cycle.

(6) Evaluation on high-temperature life-span property (45°C)

The lithium secondary batteries of Examples and Comparative Examples were charged (CC/CV, 0.1C, lower limit voltage of 0.005V, and cut-off current of 0.01C) and discharged (CC, 0.1C, upper limit voltage of 1.5V cut-off) at 45°C as one cycle to perform the first cycle. Thereafter, the charging/discharging was repeated by 800 cycles with a 10-minute interval between the cycles to measure a discharge capacity. A high-temperature life-span property was evaluated as a percentage (%) of a value obtained by dividing a discharge capacity at the 800th cycle by a discharge capacity at the first cycle.

(7) Evaluation on high-temperature storage property (60°C)

The lithium secondary batteries of the Examples and Comparative Examples were charged (CC/CV, 0.5C, upper limit voltage of 4.2V, cut-off current of 0.05C) and discharged (CC, 0.5C, lower limit voltage of 2.5V cut-off) once at 25°C, and then charged to SOC100% and stored at 60°C for 12 weeks. After 12 weeks, a discharge capacity was measured, and a high-temperature storage property was evaluated as a percentage (%) of a value divided by an initial discharge capacity.

(8) Evaluation on power property

A HPPC room temperature power property (W/kg) of the lithium secondary batteries of Examples and Comparative Examples were measured by a hybrid pulse power characterization by FreedomCar Battery Test Manual (HPPC).

The results are shown in Tables 4 and 5 below.

[Table 4]

|  | anode adhesive force (N) | anode resistance (mΩ·cm) | anode expansion ratio (%) | initial discharge capacity (Ah) | initial efficiency (%) |
|---|---|---|---|---|---|
| Example 1 | 0.2475 | 35.1 | 9.8 | 23.52 | 88.23 |
| Example 2 | 0.2401 | 42.1 | 9.9 | 23.53 | 88.43 |
| Example 3 | 0.2450 | 45.1 | 10.3 | 23.57 | 88.53 |
| Example 4 | 0.2325 | 36.6 | 10.6 | 23.58 | 87.57 |
| Example 5 | 0.2015 | 59.9 | 15.1 | 22.18 | 87.09 |
| Example 6 | 0.1866 | 70.1 | 13.9 | 22.31 | 86.79 |
| Example 7 | 0.2075 | 57.6 | 14.1 | 22.52 | 86.81 |
| Example 8 | 0.2070 | 60.0 | 15.1 | 23.35 | 84.11 |
| Comparative Example 1 | 0.1805 | 75.6 | 17.8 | 21.08 | 83.67 |
| Comparative Example 2 | 0.1775 | 79.1 | 16.9 | 20.39 | 83.79 |
| Comparative Example 3 | 0.1699 | 78.1 | 18.6 | 21.88 | 83.98 |
| Comparative Example 4 | 0.1781 | 78.3 | 19.3 | 21.67 | 83.04 |
| Comparative Example 5 | 0.1763 | 77.8 | 18.8 | 21.22 | 83.07 |

[Table 5]

|  | life-span property (%) | high-temperature life-span property (%) | high-temperature storage property (%) | power property (W/kg) |
|---|---|---|---|---|
| Example 1 | 90.36 | 89.66 | 88.12 | 3445 |
| Example 2 | 91.01 | 90.18 | 88.02 | 3358 |
| Example 3 | 90.99 | 89.01 | 89.98 | 3442 |

(continued)

|  | life-span property (%) | high-temperature life-span property (%) | high-temperature storage property (%) | power property (W/kg) |
|---|---|---|---|---|
| Example 4 | 90.81 | 90.01 | 88.01 | 3371 |
| Example 5 | 88.18 | 87.33 | 85.83 | 3122 |
| Example 6 | 86.84 | 85.81 | 84.62 | 3293 |
| Example 7 | 88.02 | 86.26 | 85.11 | 3194 |
| Example 8 | 88.07 | 85.01 | 85.22 | 3135 |
| Comparative Example 1 | 85.98 | 84.01 | 84.11 | 2995 |
| Comparative Example 2 | 85.84 | 84.81 | 84.42 | 2893 |
| Comparative Example 3 | 85.22 | 84.38 | 83.32 | 2682 |
| Comparative Example 4 | 85.01 | 83.26 | 84.32 | 2682 |
| Comparative Example 5 | 85.18 | 82.09 | 83.91 | 2682 |

Referring to Tables 4 and 5, in Examples, the anode had high adhesive force and low resistance, and the volume expansion ratio was low even during charging and discharging. Additionally, the lithium secondary battery provided the high initial efficiency and power properties, and the life-span properties at room temperature and high temperature were improved compared to those from Comparative Examples.

However, in Comparative Examples, the adhesion force of the anode was low, the expansion ratio was high, and the anode had high resistance. Further, the life-span property, power property and initial efficiency of the lithium secondary battery were less than those from Examples.

**Claims**

1. An anode active material for a lithium secondary battery comprising a silicon-based active material that comprises silicon oxide particles and a carbon coating layer formed on at least a portion of a surface of the silicon oxide particles,

   wherein a carbon crystallinity defined by Equation 1 of the carbon coating layer is in a range from 0.3 to 0.9:

   $$[\text{Equation 1}]$$

   $$\text{carbon crystallinity} = I_a/I_b$$

   wherein, in Equation 1, $I_a$ represents an intensity of a C=C peak measured by an X-ray absorption spectroscopy (XAS), and $I_b$ represents an intensity of a C-H peak measured by the XAS.

2. The anode active material for a lithium secondary battery of claim 1, wherein the carbon crystallinity of the carbon coating layer is in a range from 0.4 to 0.8.

3. The anode active material for a lithium secondary battery of claim 1 or 2, wherein the silicon oxide particles comprise $SiOx$ ($0<x\leq2$).

4. The anode active material for a lithium secondary battery of any one of claims 1 to 3, wherein an O1s peak area ratio measured by an X-ray photoelectron spectroscopy (XPS) analysis and defined by Equation 2 is in a range from 0.02 to 0.05 and preferably 0.025 to 0.04:

   $$[\text{Equation 2}]$$

   $$\text{O1s peak area ratio} = A_O/A_H$$

wherein, in Equation 2, $A_O$ is an area of an O1s peak measured by the XPS on the silicon oxide particles, and $A_H$ is an area of a Si-OH peak measured by the XPS on the silicon oxide particles.

5. The anode active material for a lithium secondary battery of any one of claims 1 to 4, wherein the silicon oxide particles have a core portion and a surface portion formed on the core portion, and an oxidation number ratio defined by Equation 3 of the silicon oxide particles is in a range from 0.2 to 1:

[Equation 3]

$$\text{oxidation number ratio} = O_S/O_C$$

wherein, in Equation 3, $O_S$ is an oxidation number of the surface portion of the silicon oxide particles obtained by an X-ray photoelectron spectroscopy (XPS) analysis, and $O_C$ is an oxidation number of the core portion of the silicon oxide particles obtained by the XPS analysis.

6. The anode active material for a lithium secondary battery according to claim 5, wherein a shortest distance from a surface of the silicon oxide particle to the core portion is 30 nm or more.

7. The anode active material for a lithium secondary battery according to any one of claims 1 to 6, wherein a peak intensity ratio of a Raman spectrum defined by Equation 4 is in a range from 1 to 7, and preferably 2 to 5.5:

[Equation 4]

$$\text{peak intensity ratio of Raman spectrum} = I(520)/I(470)$$

wherein, in Equation 4, I(520) is a peak intensity of the silicon oxide particles in the Raman spectrum at a wavelength of 520 cm$^{-1}$, and I(470) is a peak intensity of the silicon oxide particles in the Raman spectrum at a wavelength of 470 cm$^{-1}$.

8. The anode active material for a lithium secondary battery of any one of claims 1 to 7, wherein a crystallite size of the silicon oxide particles as measured by an X-ray diffraction (XRD) analysis and defined by Equation 5 is in a range from 2 nm to 6 nm:

[Equation 5]

$$L = \frac{0.9\lambda}{\beta cos\theta}$$

wherein, in Equation 5, L is the crystallite size of the silicon oxide particle measured by the XRD analysis and represented by a unit of nanometer (nm), $\lambda$ is an X-ray wavelength represented by a unit of nanometer (nm), $\beta$ is a full width at half maximum (FWHM) of a (111) plane of the silicon oxide particles represented by a unit of rad, and $\theta$ is a diffraction angle represented by a unit of rad.

9. The anode active material for a lithium secondary battery of any one of claims 1 to 8, wherein (a) a specific surface area of the silicon oxide particles is in a range from 1 m$^2$/g to 5 m$^2$/g, and/or (b) an average particle diameter (D50) of the silicon oxide particles is in a range from 4 $\mu$m to 7 $\mu$m.

10. The anode active material for a lithium secondary battery of any one of claims 1 to 9, further comprising a carbon-based active material including artificial graphite, natural graphite, or a mixture thereof.

11. The anode active material for a lithium secondary battery of any one of claims 1 to 10, wherein a content of the silicon oxide particles is greater than 0 wt%, and 10 wt% or less, based on a total weight of the anode active material.

12. A lithium secondary battery, comprising:

an anode comprising the anode active material for a lithium secondary battery according to any one of claims 1 to 11; and
a cathode facing the anode.

13. A method of preparing an anode active material for a lithium secondary battery, comprising:

mixing and heat-treating silicon sources to obtain silicon oxide particles; and
forming a carbon coating layer by reacting the silicon oxide particles with a carbon gas,
wherein a carbon crystallinity defined by Equation 1 of the carbon coating layer is in a range from 0.3 to 0.9:

$$[\text{Equation 1}]$$

$$\text{carbon crystallinity} = I_a/I_b$$

wherein, in Equation 1, $I_a$ represents an intensity of a C=C peak measured by an X-ray absorption spectroscopy (XAS), and $I_b$ represents an intensity of a C-H peak measured by the XAS.

14. The method of claim 13, wherein a temperature of the heat-treating is in a range from 800 °C to 1200 °C, preferably 850 °C to 1100 °C, more preferably 880 °C to 1000 °C, and most preferably 900 °C to 980 °C.

15. The method of claim 13 or 14, wherein the silicon sources comprise silicon particles and silicon dioxide ($SiO_2$) particles.

# FIG. 1

## FIG. 2

Europäisches
Patentamt

European
Patent Office

Office européen
des brevets

## EUROPEAN SEARCH REPORT

**Application Number**

EP 25 21 0223

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/234701 A1 (CHUNG JU HO [KR] ET AL) 11 July 2024 (2024-07-11) | 1-15 | INV. H01M4/04 |
| Y | * the whole document * * | 1-15 | H01M4/134 H01M4/36 |
| Y | US 2024/266505 A1 (PARK YANG KYU [KR] ET AL) 8 August 2024 (2024-08-08) * abstract * * * paragraphs [0012], [0064], [0160]; claims 1,7 * | 7,8 | H01M4/587 H01M4/62 H01M10/052 |
| Y | MADHURI THAKUR ET AL: "Inexpensive method for producing macroporous silicon particulates (MPSPs) with pyrolyzed polyacrylonitrile for lithium ion batteries", SCIENTIFIC REPORTS, vol. 2, 8 November 2012 (2012-11-08), XP055170815, DOI: 10.1038/srep00795 * the whole document * * | 1-15 | |

**TECHNICAL FIELDS
SEARCHED (IPC)**

H01M

The present search report has been drawn up for all claims

| Place of search | Date of completion of the search | Examiner |
|---|---|---|
| The Hague | 3 March 2026 | Standaert, Frans |

**EP 4 730 411 A1**

## ANNEX TO THE EUROPEAN SEARCH REPORT
## ON EUROPEAN PATENT APPLICATION NO.

EP 25 21 0223

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2026

| Patent document cited in search report | | Publication date | Patent family member(s) | | Publication date |
|---|---|---|---|---|---|
| US 2024234701 | A1 | 11-07-2024 | CN | 118299554 A | 05-07-2024 |
| | | | EP | 4431455 A1 | 18-09-2024 |
| | | | KR | 20240109114 A | 10-07-2024 |
| | | | US | 2024234701 A1 | 11-07-2024 |
| US 2024266505 | A1 | 08-08-2024 | CN | 118431427 A | 02-08-2024 |
| | | | EP | 4411872 A1 | 07-08-2024 |
| | | | KR | 20240120460 A | 07-08-2024 |
| | | | US | 2024266505 A1 | 08-08-2024 |

EPO FORM P0459

For more details about this annex : see Official Journal of the European Patent Office, No. 12/82